# EUROPÄISCHE PATENTSCHRIFT

(11) **EP 3 586 988 B1**
(45) Veröffentlichungstag und Bekanntmachung des Hinweises auf die Patenterteilung: **06.07.2022**
(21) Anmeldenummer: 19176861.3
(22) Anmeldetag: 28.05.2019
(51) Int. Cl.: B21D 5/08, B21D 35/00, B21D 47/01, B21D 53/92, B21D 53/88

(54) **VERFAHREN ZUM HERSTELLEN EINES QUERTRÄGERS FÜR EIN FAHRZEUG SOWIE EIN QUERTRÄGER FÜR EIN FAHRZEUG**
METHOD FOR PRODUCING A CROSS MEMBER FOR A VEHICLE AND A CROSS MEMBER FOR A VEHICLE
PROCÉDÉ DE FABRICATION D'UNE TRAVERSE POUR UN VÉHICULE AINSI QUE TRAVERSE POUR UN VÉHICULE

(30) Priorität: 29.06.2018 DE 102018115740
(43) Veröffentlichungstag der Anmeldung: 01.01.2020
(73) Patentinhaber: Airbus Operations GmbH, 21129 Hamburg (DE)
(72) Erfinder: Tiryaki, Memis, 21129 Hamburg (DE); Noebel, Torsten, 21129 Hamburg (DE); Eilken, Wolfgang, 21129 Hamburg (DE); Schulze, Wolfgang, 21129 Hamburg (DE)

(56) Entgegenhaltungen:
- EP-A1- 0 021 791
- EP-A1- 2 604 354
- DE-A1- 10 013 527
- US-A- 4 006 617

## Beschreibung

### TECHNISCHES GEBIET

Die Erfindung betrifft ein Verfahren zum Herstellen eines Querträgers für ein Fahrzeug, insbesondere eines Querträgers für einen Fußbodenaufbau, einen Querträger für ein Fahrzeug sowie ein Fahrzeug mit einer Fahrzeugstruktur und mindestens einem Querträger, der an der Fahrzeugstruktur befestigt ist.

### HINTERGRUND DER ERFINDUNG

Größere Verkehrsmittel können einen Fußbodenaufbau aufweisen, der auf mit einer Primärstruktur verbundenen Querträgern angeordnet ist. In Verkehrsflugzeugen können solche Querträger etwa aus metallischen Werkstoffen bestehen, welche mittels bandartigem Material, das von einer Art Spule abgewickelt und über Rollen gewalzt wird, hergestellt werden. Hierdurch wird das bandartige Material so umgeformt, dass ein gewünschtes Profil erhalten wird. Ausnehmungen und Löcher zum Reduzieren des Gewichts des Querträgers werden durch Stanzen und Tiefziehen, Laserschneiden oder andere Verfahren hergestellt.

DE 10 2005 060 252 A1 zeigt etwa ein Verfahren zum Herstellen eines Querträgers oder eines Strukturbauteils eines Fahrzeugs, bei dem eine Rollen oder Walzen aufweisende Profilierstation eingesetzt wird.

DE 10 2009 060 694 B4 offenbart einen Querträger für eine Fußbodenstruktur eines Flugzeugs mit einem Steg, der mit seinen voneinander abgewandten Endabschnitten an gegenüberliegenden Strukturabschnitten eines Flugzeugrumpfes anbindbar ist, wobei der Steg zumindest einen Stufenabschnitt aufweist, der durch eine Versetzung des Stegs in Richtung seiner Hochachse gebildet ist, wobei der Stufenabschnitt gegenüber benachbarten Stegabschnitten querschnittsverjüngt ist und die Stegabschnitte jeweils einen gegenüber den Endabschnitten zurückgesetzten Untergurtabschnitt haben. Damit können insbesondere Systemleitungen günstig unterhalb des Querträgers verlegt werden.

EP 2 604 354 A1, die die Basis für die Oberbegriffe der Ansprüche 1 und 9 bildet, offenbart eine Rollumformstation zur Umformung von Blech oder Blechband, mit einer für das Blech oder Blechband vorgesehenen Vorschubrichtung, umfassend mindestens ein erstes Gerüst mit einem ersten Rollensatz, wobei der Rollensatz mindestens eine erste Rolle mit einer Rotationsachse und eine zweite Rolle mit einer Rotationsachse umfasst. Die Rollen bilden zwischen sich einen Rollumformbereich aus.

US 4 006 617 A offenbart mehrere Umformstationen, die jeweils einzeln numerisch gesteuert werden, um nacheinander einen Rohling zu einem konischen Strukturbauteil zu walzen. Jede Formstation umfasst obere und untere Baugruppen von Formwalzen, die auf einem Paar benachbarter Wellen montiert sind, so dass im Allgemeinen eine Öffnung definiert wird, durch die der Rohling während des Walzens hindurchgeht.

### ZUSAMMENFASSUNG DER ERFINDUNG

Während mit der Verwendung von Rollen und Walzen ein einfaches Verformen von Blechen durchführbar ist, erfordert die relativ komplexe Formgebung eines Querträgers für Flugzeuge ein ebenso komplexes Herstellverfahren. Dies kann neben der reinen Verformung auch spanabhebende Schritte umfassen.

Es ist eine Aufgabe der Erfindung, ein Verfahren zum Herstellen eines Querträgers vorzuschlagen, bei dem eine möglichst einfache Herstellung ermöglicht wird und insbesondere auf spanabhebende Verfahrensschritte verzichtet werden kann.

Die Aufgabe wird durch ein Verfahren mit den Merkmalen des unabhängigen Anspruchs 1 gelöst. Vorteilhafte Weiterbildungen und Ausführungsformen sind den Unteransprüchen und der nachfolgenden Beschreibung zu entnehmen.

Es wird ein Verfahren zum Herstellen eines Querträgers für ein Fahrzeug vorgeschlagen, das Verfahren aufweisend die Schritte des Bereitstellens eines unterschiedliche Dicken und eine Vorkontur aufweisenden Werkstücks aus einem Blech gleichförmiger Dicke durch ebenes Rollformen zum Erreichen unterschiedlicher lokaler Dicken und Ausschneiden des Werkstücks, und des umbiegenden Rollformens des Werkstücks zum Ausbilden eines Querträgers mit einem Querschnitt, der zumindest zwei gegenüberliegend angeordnete Flansche und einen dazwischen liegenden Steg aufweist, wobei der Abstand der gegenüberliegend angeordneten Flansche entlang einer Längserstreckung des Querträgers nicht konstant ist und ein Dickenverlauf zumindest des Stegs von dem Schritt des ebenen Rollformens bestimmt wird und wobei die lokalen Dicken und die Vorkontur derart gewählt sind, dass eine geometrische Form des Querträgers nach dem umbiegenden Rollformen einer vorbestimmten geometrischen Form mit unterschiedlichen Dicken und Höhen des Stegs und unterschiedlich geformten Bereichen der Flansche entlang der Längserstreckung des Querträgers entspricht, wobei die Flansche derart geformt sind, dass sie im mittleren Bereich der Längserstreckung des Querträgers ein C-förmiges Profil aufweisen und an den jeweiligen Enden des Querträgers ein U-förmiges Profil aufweisen.

Das erfindungsgemäße Verfahren weist folglich drei wesentliche Hauptschritte auf, um den Querträger herzustellen, wenn ein Blech mit einer gleichförmigen Dicke als Ausgangsbasis bereitsteht.

Durch den Schritt des ebenen Rollformens werden unterschiedliche lokale Dicken des Werkstücks erreicht, die später die Dicke des Stegs und/oder der Flansche bestimmen. Es können hierbei Bereiche mit einer maximalen Materialstärke und mehrere zweite Bereiche mit einer minimalen Materialstärke erzeugt werden, wobei weitere Bereiche mit dazwischen liegenden Dicken oder Übergängen von angrenzenden Dicken möglich sind. Die Vorkontur kann folglich als geometrische Abwicklung des Querträgers angesehen werden. Das Ausschneiden des ebenen Werkstoffs ist ein für die Vorbereitung des Querträgers ebenso wesentlicher Schritt.

Das ebene Rollformen und das Ausschneiden kann in unterschiedlicher Abfolge realisiert sein. Es könnte bei einem Blech mit sehr homogener Dicke in einer Variante möglich sein, zunächst ein Werkstück mit einer vorläufigen Vorkontur auszuschneiden, um dieses anschließend durch ebenes Rollformen in der Dicke zu bearbeiten. Hieraus entsteht neben dem gewünschten Dickenverlauf auch die gewünschte Vorkontur. Die Bestimmung der vorläufigen Vorkontur ist von der Querkontraktion des Blechs bei dem anschließenden ebenen Rollformen abhängig. Die vorläufige Vorkontur könnte hierzu etwa in einem iterativen Prozess ermittelt werden, um eine wiederholbare Präzision der anschließenden Vorkontur zu gewährleisten.

Allerdings kann auch zunächst eine Dickenbearbeitung des Blechs durch das ebene Rollformen durchgeführt werden, so dass ein gewünschter Dickenverlauf erfolgt. Anschließend kann das Werkstück direkt mit der passenden Vorkontur aus dem bearbeiteten Blech ausgeschnitten werden.

Das ausgeschnittene Werkstück weist folglich einen gewünschten Dickenverlauf auf und besitzt eine für das weitere Verformen geeignete Vorkontur. Diese ist für die spätere räumliche Form des Querträgers ausschlaggebend, denn sie ist derart gewählt, dass nach dem darauffolgenden umbiegenden Rollformen exakt die gewünschte Form des Querträgers entsteht. Dies bedeutet, dass alle Außenkonturen des resultierenden Querträgers den vorgegebenen Außenkonturen entsprechen und sämtliche Dicken des Stegs und der Flansche durch das ebene Rollformen erreicht werden. Folglich ist eine spanende Nachbearbeitung des Querträgers nach dem umbiegenden Rollformen nicht erforderlich, um die gewünschten Außenkonturen und den gewünschten Verlauf der Materialstärke des Stegs und der Flansche zu erhalten.

Das umbiegende Rollformen, das etwa in Form eines Rollprofilierens ausgeführt wird, ist dazu vorgesehen, durch Umbiegen einzelner Flächenbereiche des Werkstücks ein räumliches Gebilde in Form des Querträgers aus dem ebenen Werkstück herzustellen. Hierzu kann insbesondere eine Profilieranlage eingesetzt werden, die das Umbiegen als Walzbiegen in Form von Walzprofilieren, Rollformen oder Kaltwalzen durchführt. Bei diesem Vorgang wird das Werkstück durch mehrere Walzenpaare geleitet, welche derart angeordnet und ausgeformt sind, dass sie auf das Werkstück verformend einwirken. Durch das einfache oder wiederholte Durchleiten des Werkstücks wird schließlich die gewünschte Profilform erreicht. Es ist vorstellbar, dass die einzelnen Walzenpaare der eingesetzten Vorrichtung räumlich fest angeordnet sind, so dass sie eine Art Walzstraße ausbilden und nach dem einfachen Durchleiten des Werkstücks die gewünschte Formgebung erreicht ist. Alternativ dazu können die Walzenpaare auch an unterschiedlichen Positionen angeordnet sein und insbesondere computergesteuert bewegt werden. Derart bewegliche, gesteuerte Rollen sind bei Dickensprüngen sinnvoll, um eine Maßhaltigkeit des herzustellenden Querträgers sicherzustellen. So könnte es ermöglicht werden, stärkere lokale Abweichungen in der Ausgestaltung des Querträgers zu erreichen, ohne eine ausgedehnte Walzstraße zu erfordern. Diese wäre jedoch eine alternative Option, bei der auf einer Seite Blech von einer Spule eingeführt wird und auf einer anderen Seite fertige Querträger zusammenhängend ausgegeben werden, welche anschließend nur noch getrennt werden müssen.

Aus dem erfindungsgemäßen Verfahren resultiert folglich ein Querträger, der etwa für die Auflage einer Fußbodenkonstruktion in einem Flugzeug geeignet ist. Das bedeutet, dass der Querträger mit zwei einander entgegengesetzten Enden an einer Primärstruktur eines Flugzeugs angebracht werden kann und sich quer zu der Längsachse des Flugzeugrumpfes erstreckt. Die zumindest zwei einander gegenüberliegend angeordneten Flansche können folglich an einer Oberseite und einer Unterseite des Querträgers platziert sein, wobei einer der Flansche, der an der Oberseite angeordnet ist, Fußbodenschienen oder Ähnliches einer Fußbodenkonstruktion tragen kann.

Das Fahrzeug kann insbesondere ein Flugzeug sein, so dass das Verfahren insbesondere auch ein Verfahren zum Herstellen eines Querträgers für ein Flugzeug sein kann.

In einer vorteilhaften Ausführungsform wird das umbiegende Rollformen derart durchgeführt, dass der Abstand der gegenüberliegend angeordneten Flansche in mindestens einem ersten Abschnitt den Abstand in dem übrigen Teil des Querträgers unterschreitet. Eine derartige Variation der resultierenden Steghöhe kann zu einer belastungsgerechten Anpassung eines Flächenträgheitsmoments des Querträgers führen, wenn der erste Abschnitt dort vorgesehen ist, wo im Betrieb des Flugzeugs eine geringere mechanische Belastung vorliegt. Es ist davon auszugehen, dass zum Beispiel in einem mittleren Bereich des Querträgers die höchsten mechanischen Beanspruchungen zu erwarten sind, so dass dort beispielsweise das größte Flächenträgheitsmoment vorliegen sollte. An anderen Bereichen des Querträgers könnten andere Ausgestaltungen des Profils des Querträgers realisiert sein, die an eine etwas geringere mechanische Belastung angepasst sind und zudem das Durchführen von Leitungen an der Unterseite des Querträgers erlauben.

In einer bevorzugten Ausführungsform werden bei dem umbiegenden Rollformen mindestens ein erster Flansch und mindestens ein zweiter Flansch hergestellt, wobei der erste Flansch eine entlang der Längserstreckung des Querträgers durchgehend ebene Auflagefläche aufweist und wobei der zweite Flansch entlang der Längserstreckung des Querträgers unterschiedlich weit von dem ersten Flansch beabstandet ist. Der mindestens eine erste Flansch ist folglich dazu vorgesehen, an einer Oberseite des Querträgers positioniert zu werden, wenn dieser an der Primärstruktur des Flugzeugrumpfs angebracht ist. Der zweite Flansch befindet sich demnach an der Unterseite des Querträgers und ist in vertikaler Richtung unterschiedlich weit von dem ersten Flansch beabstandet. Zur Berücksichtigung einer mechanischen Belastung, die in bestimmten Bereichen geringer sein kann als in anderen, benachbarten Bereichen, kann etwa ein Teil des zweiten Flansches einen geringeren Abstand zu dem ersten Flansch aufweisen als in anderen, benachbarten Teilen. Der Versatz oder die Einwölbung des zweiten Flansches an der Unterseite kann folglich einen Aufnahmeraum zum Durchleiten von elektrischen und anderen Leitungen bereitstellen.

In einer vorteilhaften Ausführungsform wird die Vorkontur derart gewählt, dass in zumindest einem Abschnitt des Querträgers eine Einwölbung in Richtung des ersten Flansches vorliegt. Diese Einwölbung kann genutzt werden, um Leitungen an dem Querträger vorbei zu installieren. Die Einwölbung kann bevorzugt derart ausgestaltet sein, dass vorgesehene Leitungen weitgehend bündig mit benachbarten Bereichen des zweiten Flansches installiert werden können. Es ist weiterhin sinnvoll, die Einwölbung mit einem harmonischen, stetigen und ohne abrupte Änderungen ausgeführten Krümmungsverlauf vorzusehen. Dadurch können Kerbwirkungen und Spannungsspitzen vermieden werden.

In einer ebenso bevorzugten Ausführungsform sind zwei erste Abschnitte vorgesehen, die außermittig an dem Querträger voneinander beabstandet angeordnet sind. Die beiden ersten Abschnitte könnten auf zwei unterschiedlichen Hälften des Querträgers angeordnet sein, so dass beide Seiten des Querträgers dazu ausgebildet sind, Leitungen insbesondere an einer Unterseite durchzuführen.

In einer besonders bevorzugten Ausführungsform ist das ebene Rollformen derart durchgeführt, dass in einem Mittenbereich des Querträgers die Blechdicke am höchsten ist. Resultierend daraus ist die Dicke des Stegs des Querträgers in der Mitte des Querträgers in dieser Ausführungsform am größten. Dies kann weiterhin auch die Dicke der Flansche betreffen, die folglich in dem Mittenbereich am größten sein könnten. Insgesamt wird hierdurch ein maximales Flächenträgheitsmoment bereitgestellt, welches zu einer besonders hohen mechanischen Stabilität im Bereich des Zentrums des Querträgers führt.

In einer weiter vorteilhaften Ausführungsform ist das ebene Rollformen derart ausgeführt, dass die Blechdicke in dem Bereich des ersten Abschnitts geringer ist als in benachbarten Abschnitten. Dies führt folglich zu einer geringeren Stegdicke und, falls gewünscht, zu einer geringeren Flanschdicke in dem ersten Abschnitt, in dem eine Einwölbung zum Durchführen von Leitungen vorhanden sein könnte. Dadurch wird das Flächenträgheitsmoment in diesem Bereich gesenkt.

Bevorzugt ist das ebene Rollformen derart ausgeführt, dass zwischen zwei Abschnitten unterschiedlicher Blechdicke ein Übergangsbereich angeordnet ist, in dem die Dicke stetig sinkt und der stetig an die beiden benachbarten Bereiche anschließt. Ein solcher Übergangsbereich verhindert die Ausbildung einer stufenförmig geänderten Dicke des Blechs und demzufolge eine Unstetigkeit der Stabilität. Kerbspannungen und dergleichen können folglich verhindert werden.

Die Erfindung betrifft ferner einen Querträger für ein Fahrzeug, aufweisend mindestens zwei einander gegenüberliegend angeordnete Flansche und einen dazwischenliegenden Steg, wobei der Abstand der gegenüberliegend angeordneten Flansche entlang der Längserstreckung des Querträgers nicht konstant ist und die Dicke zumindest des Stegs entlang der Längserstreckung des Querträgers nicht konstant ist und wobei der Querträger durch ein spanloses Umformverfahren hergestellt ist, wobei die Flansche derart geformt sind, dass sie im mittleren Bereich der Längserstreckung des Querträgers ein C-förmiges Profil aufweisen und an den jeweiligen Enden des Querträgers ein U-förmiges Profil aufweisen. Insbesondere ist dieses spanlose Umformverfahren das vorangehend beschriebene Verfahren zum Herstellen eines Querträgers für ein Fahrzeug, wie in Anspruch 1 angegeben.

Durch den spanlosen Herstellprozess kann bei der Herstellung des Querträgers deutlich Zeit eingespart werden und gleichzeitig werden die mechanischen Eigenschaften des Querträgers aufgrund der Ausformung basierend auf einem Blech sehr gleichmäßig und harmonisch gewählt.

In einer vorteilhaften Ausführungsform unterschreitet der Abstand der gegenüberliegend angeordneten Flansche in mindestens einem ersten Abschnitt den Abstand in dem übrigen Teil des Querträgers.

Bevorzugt weist der erste Flansch eine entlang der Längserstreckung des Querträgers durchgehend ebene Auflagefläche auf, wobei der zweite Flansch entlang der Längserstreckung des Querträgers unterschiedlich weit von dem ersten Flansch beabstandet ist.

In einer weiter vorteilhaften Ausführungsform kann in zumindest einem Abschnitt des Querträgers eine Einwölbung des zweiten Flansches in Richtung des ersten Flansches vorliegen.

Desweiteren betrifft die Erfindung ein Fahrzeug, aufweisend eine Fahrzeugstruktur und mindestens einen Querträger mit den Merkmalen der vorhergehenden Beschreibung, der an der Fahrzeugstruktur befestigt ist. Das Fahrzeug ist insbesondere ein Flugzeug. Bevorzugt kann das Fahrzeug einen Rumpf mit einer Rumpfstruktur als Fahrzeugstruktur aufweisen, wobei mehrere Querträger quer zu einer Längsachse des Rumpfs an der Rumpfstruktur angeordnet sind.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine schematische Darstellung der einzelnen Schritte des Verfahrens.
Fig. 2 zeigt eine Teilschnittdarstellung eines Querträgers, der an einem Spant angeschlossen ist.
Fig. 3 zeigt eine Variante mit vier Einwölbungen an einer Unterseite des Querträgers.
Fig. 4 zeigt eine Variante mit einer Einwölbung an einer Unterseite und einer Auswölbung an einer Oberseite des Querträgers.
Fig. 5 zeigt ein Flugzeug mit einem Rumpf und darin angeordneten Querträgern.

### DETAILLIERTE DARSTELLUNG EXEMPLARISCHER AUSFÜHRUNGSFORMEN

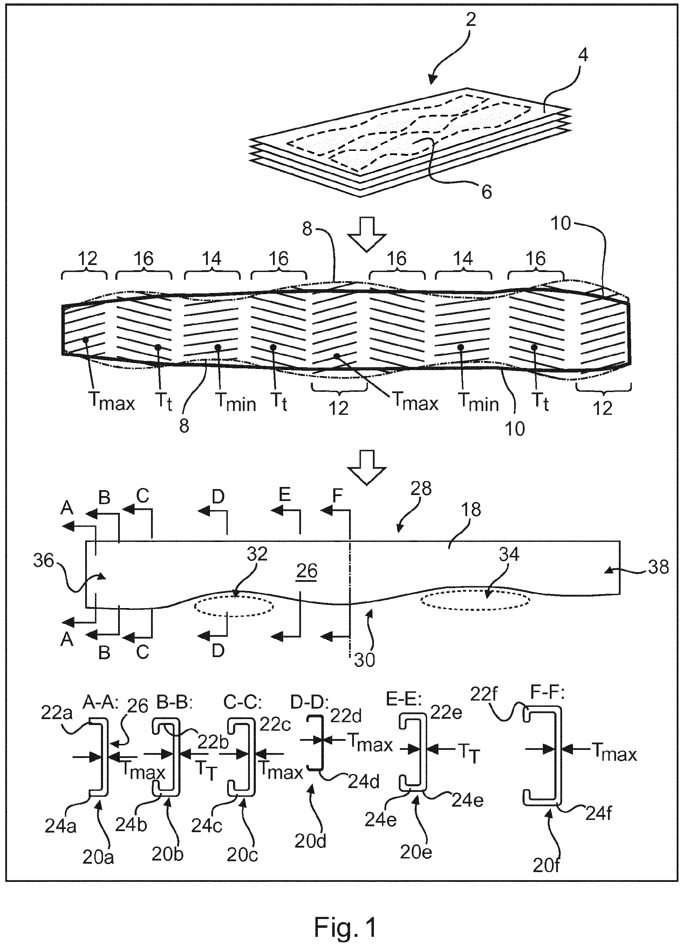

Fig. 1 zeigt einen Ablauf des erfindungsgemäßen Verfahrens 2 in einer schematisierten Darstellung. Zunächst wird ein Blech 4 mit einer gleichförmigen Dicke bereitgestellt.

Das Blech 4 wird anschließend durch ebenes Rollformen derart bearbeitet, dass lokale Dicken geändert werden.

Beispielhaft werden an dem Blech 4 drei erste Bereiche 12 erzeugt, die eine maximale Dicke (Tmax) aufweisen. Zwei zweite Bereiche 14 sind vorgesehen, welche zwischen den ersten Bereichen 12 angeordnet sind und hier beispielhaft eine minimale Materialstärke (Tmin) aufweisen. Zwischen sämtlichen ersten Bereichen 12 und zweiten Bereichen 14 sind zusätzlich dritte Bereiche 16 in Form von Übergangsbereichen mit einer Dicke Tt vorgesehen, in denen ein stetiger Übergang der Dicke Tmax zu Tmin erfolgt. Folglich ist das Werkstück 6 dazu angepasst, den herzustellenden Querträger mit belastungsgerechten Wandstärken zu versehen.

Aus dem so bearbeiteten Blech wird ein ebenes Werkstück 6 mit einer Vorkontur 10 ausgeschnitten. Die Vorkontur 10 ist hierbei die Außenkontur, welche die Form des Werkstücks 6 bestimmt.

Alternativ dazu könnte das Werkstück 6 auch vor dem ebenen Rollformen aus dem Blech 4 geschnitten werden. Das Werkstück 6 hätte dann zunächst eine vorläufige Vorkontur 8. Nach dem ebenen Rollformen resultiert aufgrund der Querkontraktion des Werkstücks 6 die gewünschte Vorkontur 10, die Basis für den nächsten Schritt ist.

Anschließend wird das Werkstück 6 durch ein umbiegendes Rollformen zu einem Querträger 18 geformt. Dies wird insbesondere durch sukzessives randseitiges Umbiegen des Werkstücks 6 zum Erhalt der gewünschten Form durchgeführt. Der Querträger 18 besitzt eine Reihe von unterschiedlichen Querschnitten 20a bis 20f, die jeweils zwei einander gegenüberliegend angeordnete Flansche 22a und 24a bis 22f und 24f aufweisen. Beide Flansche 22a bis 22f und 24a bis 24f schließen jeweils einen Steg 26 ein, der entlang der Längserstreckung des Querträgers 18 keine konstante Höhe aufweist. Der Querschnitt 20a ist nah an einem ersten Ende 36 des Querträgers 18 angeordnet, während der Querschnitt 20f nah einer Mitte des Querträgers 18 positioniert ist. Die Querschnitte 20a bis 20f repräsentieren damit praktisch eine Hälfte des Querträgers 18. Die andere Hälfte kann auf dieselbe Weise ausgestaltet sein.

Der resultierende Querträger 18 weist eine flache Auflagefläche 28 auf, die bei in einem Flugzeugrumpf installierten Querträger 18 dazu eingerichtet ist, eine Fußbodenkonstruktion aufzunehmen. Dies kann etwa in Form von Fußbodenschienen oder anderen Trägern realisiert sein, zwischen denen Fußbodenplatten angeordnet werden.

Eine Unterseite 30, an der die zweiten Flansche 24a bis 24f angeordnet sind, weist beispielhaft zwei Einwölbungen 32 und 34 auf, in denen die Höhe des Stegs 26 besonders gering ist. Diese Einwölbungen 32 und 34 können zum Durchführen von Leitungen an einer Unterseite des Querträgers 18 genutzt werden. Zwei einander gegenüberliegende Enden 36 und 38 des Querträgers sind weiterhin dazu vorgesehen, den Querträger 18 an einer Primärstruktur des Flugzeugrumpfes zu befestigen. Dies könnte etwa über Niet- oder Bolzenverbindungen erfolgen.

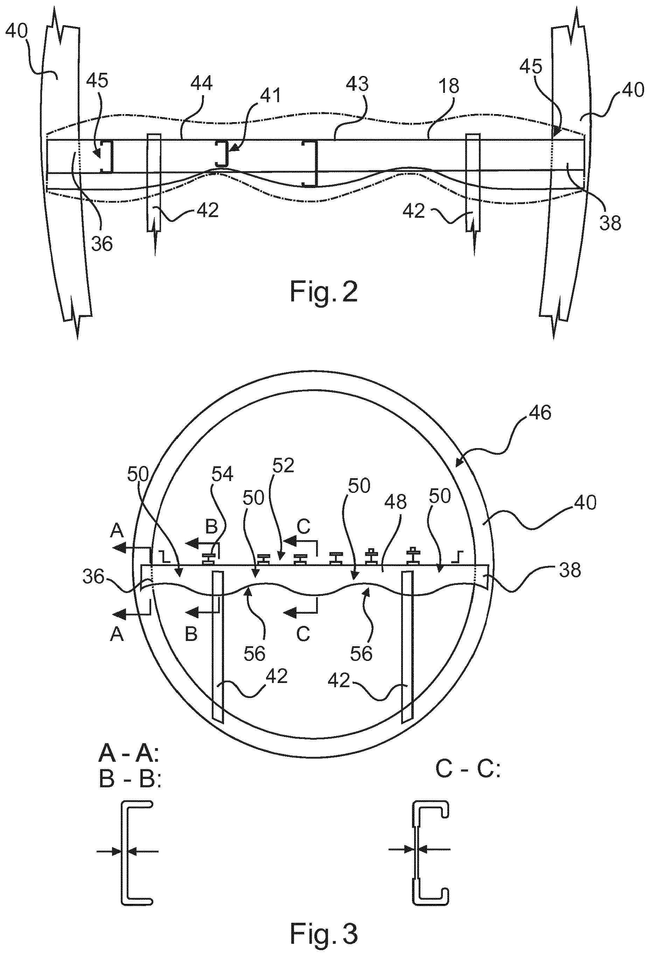

In Fig. 2 wird der installierte Querträger 18 gezeigt, der sich zwischen zwei einander gegenüberliegenden Befestigungsbereichen eines Spants 40 als Fahrzeugstruktur oder Rumpfstruktur erstreckt. Wie schematisch angedeutet, ist der Profilquerschnitt des Querträgers 18 belastungsgerecht gestaltet. Während ein herkömmlicher Querträger, der beispielsweise eine Kontur 44 aufweist, eine durchgehende konstante Steghöhe besitzt, weist der erfindungsgemäße Querträger 18 an Stellen höherer Belastung eine größere Steghöhe auf als in Bereichen mit niedrigerer Belastung. Es sind zumindest zwei erste Abschnitte 41 vorgesehen, in denen der Profilquerschnitt des Querträgers 18 ein Flächenträgheitsmoment aufweist, das deutlich geringer ist als das durchschnittliche Flächenträgheitsmoment. Beispielhaft liegen hier eine minimale Steghöhe und ein kleinstmöglicher Profilquerschnitt vor. In einem zweiten Abschnitt 43 ist das Flächenträgheitsmoment maximal und es liegen eine maximale Steghöhe mit maximalem Profilquerschnitt vor. Zu den Enden 36 und 38 gewandt liegen zwei dritte Abschnitte 45 vor, welche eine größenmäßig dazwischenliegende Steghöhe und dazwischenliegende Profilquerschnitte aufweisen.

Fig. 3 zeigt des Weiteren eine Gesamtansicht eines Rumpfquerschnitts 46 mit einem darin angeordneten Querträger 48, der mit einander gegenüberliegenden Enden 36 und 38 an dem Spant 40 befestigt ist und auf den Lagerstangen 42 ruht. Neben unterschiedlichen Dicken können auch unterschiedliche lokale Profilquerschnitte generiert werden, die sich auch in unterschiedlichen Flanschgeometrien und unterschiedlichen Flanschdicken äußern. Hier sind beispielhaft vier erste Abschnitte 50 vorgesehen, die einen minimalen Profilquerschnitt aufweisen. In Kombination mit einer geraden Oberseite 52, auf denen Fußbodenträger 54 angeordnet sind, werden hierdurch vier Einwölbungen 56 an einer Unterseite ausgebildet. Diese führen zu der Fähigkeit, Leitungen an der Unterseite des Querträgers 48 entlang zu führen. In zwei Schnittdarstellungen A-A, B-B und C-C werden mögliche Profilquerschnitte gezeigt, die unterschiedliche lokale Dicken und Formen aufweisen können. Der Profilquerschnitt aus der Darstellung C-C gehört etwa zu der Mitte des Querträgers 48 und beinhaltet eine C-förmige Kontur mit einer lokal niedrigen Dicke des Stegs und zu dem Steg parallel verlaufenden Endkanten der Flansche. Die Profilquerschnitte, welche zu A-A und B-B gehören, sind etwa an den Enden 36 und in einem Befestigungsbereich mit Lagerstangen 42 angeordnet.

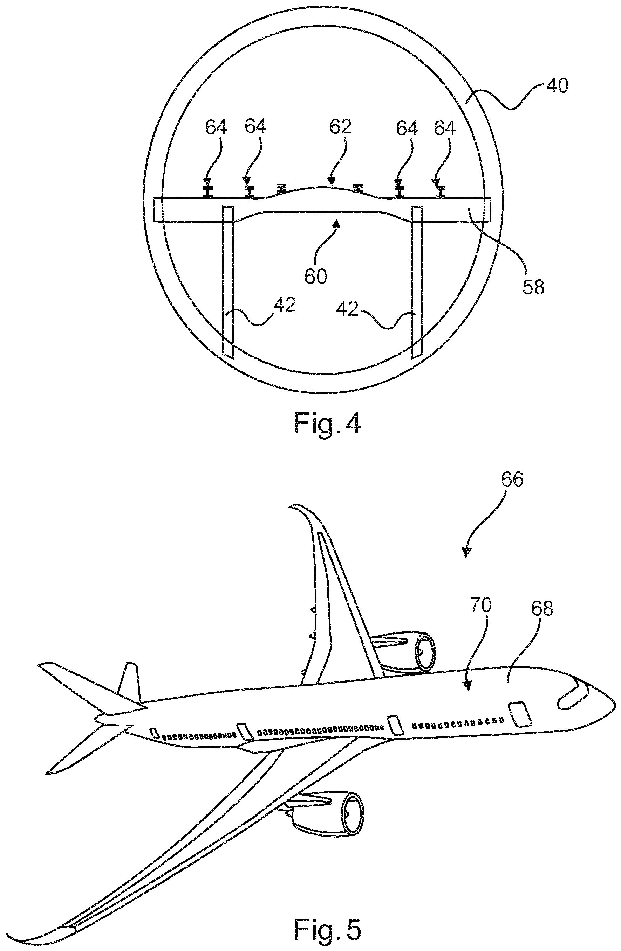

Fig. 4 zeigt eine weitere Variante eines Querträgers 58, der eine größere, zentrale Einwölbung 60 aufweist, die sich wiederum in einer zentralen Auswölbung 62 an der Oberseite niederschlägt. Dort sind überdies Fußbodenträger 64 angeordnet, die parallel voneinander und zueinander beabstandet verlaufen. Die Bauhöhen der Fußbodenträger 64 sind an die zentrale Auswölbung 62 angepasst. Insgesamt können diese dieselbe obere Begrenzung definieren.

Schließlich zeigt Fig. 5 ein Flugzeug 66, welches einen Rumpf 68 mit einem darin gebildeten Innenraum 70 aufweist, in dem mindestens ein derartiger Querträger 18, 48 oder 58 angeordnet ist.

## Patentansprüche

1. Verfahren zum Herstellen eines Querträgers (18, 48, 58) für ein Fahrzeug, aufweisend die Schritte:
- Bereitstellen eines unterschiedliche Dicken und eine Vorkontur (10) aufweisenden Werkstücks (6) aus einem Blech (4) gleichförmiger Dicke durch ebenes Rollformen zum Erreichen unterschiedlicher lokaler Dicken und Ausschneiden des Werkstücks (6), und
- umbiegendes Rollformen des Werkstücks (6) zum Ausbilden eines Querträgers (18, 48, 58) mit einem Querschnitt (20a-20f), der zumindest zwei einander gegenüberliegend angeordnete Flansche (22a-22f, 24a-24f) und einen dazwischen liegenden Steg (26) aufweist, wobei der Abstand der gegenüberliegend angeordneten Flansche (22a-22f, 24a-24f) entlang einer Längserstreckung des Querträgers (18, 48, 58) nicht konstant ist und ein Dickenverlauf zumindest des Stegs (26) von dem Schritt des ebenen Rollformens bestimmt wird,
wobei die lokalen Dicken und die Vorkontur derart gewählt sind, dass eine geometrische Form des Querträgers (18, 48, 58) nach dem umbiegenden Rollformen einer vorbestimmten geometrischen Form mit unterschiedlichen Dicken und Höhen des Stegs (26) und unterschiedlich geformten Bereichen der Flansche (22a-22f, 24a-24f) entlang der Längserstreckung des Querträgers (18, 48, 58) entspricht, **dadurch gekennzeichnet, dass** die Flansche (22a-22f, 24a-24f) derart geformt sind, dass sie im mittleren Bereich der Längserstreckung des Querträgers (18, 48, 58) ein C-förmiges Profil aufweisen und an den jeweiligen Enden des Querträgers (18, 48, 58) ein U-förmiges Profil aufweisen.

2. Verfahren nach Anspruch 1,
wobei das umbiegende Rollformen derart durchgeführt wird, dass der Abstand der gegenüberliegend angeordneten Flansche (22a-22f, 24a-24f) in mindestens einem ersten Abschnitt (41) den Abstand in dem übrigen Teil des Querträgers (18, 48, 58) unterschreitet.

3. Verfahren nach Anspruch 2,
wobei bei dem umbiegenden Rollformen mindestens ein erster Flansch (22a-22f) und mindestens ein zweiter Flansch (24a-24f) hergestellt werden,
wobei der erste Flansch (22a-22f) eine entlang der Längserstreckung des Querträgers (18, 48, 58) durchgehend ebene Auflagefläche (28) aufweist und
wobei der zweite Flansch (24a-24f) entlang der Längserstreckung des Querträgers (18, 48, 58) unterschiedlich weit von dem ersten Flansch (22a-22f) beabstandet ist.

4. Verfahren nach einem der vorhergehenden Ansprüche,
wobei die Vorkontur (10) derart gewählt wird, dass in zumindest einem Abschnitt des Querträgers (18, 48, 58) eine Einwölbung (32, 34, 56, 60) des zweiten Flansches (24a-24f) in Richtung des ersten Flansches (22a-22f) vorliegt.

5. Verfahren nach einem der vorhergehenden Ansprüche,
wobei zwei erste Abschnitte (41) vorgesehen sind, die außermittig an dem Querträger (18, 48, 58) voneinander beabstandet angeordnet sind.

6. Verfahren nach einem der vorhergehenden Ansprüche,
wobei das ebene Rollformen derart durchgeführt ist, dass in einem Mittenbereich des Querträgers (18, 48, 58) die Dicke des Werkstücks (6) am höchsten ist.

7. Verfahren nach Anspruch 2 oder 5,
wobei das ebene Rollformen derart ausgeführt ist, dass die Blechdicke in dem Bereich des ersten Abschnitts (41) geringer ist als in benachbarten Bereichen.

8. Verfahren nach einem der vorhergehenden Ansprüche,
wobei das ebene Rollformen derart ausgeführt ist, dass zwischen zwei Bereichen (12, 14) unterschiedlicher Blechdicke ein Übergangsbereich (16) angeordnet ist, in dem die Dicke stetig sinkt und der stetig an die beiden benachbarten Bereiche (12, 14) anschließt.

9. Querträger (18, 48, 58) für ein Fahrzeug, aufweisend mindestens zwei einander gegenüberliegend angeordnete Flansche (22a-22f, 24a-24f) und einen dazwischenliegenden Steg (26), wobei der Abstand der gegenüberliegend angeordneten Flansche (22a-22f, 24a-24f) entlang der Längserstreckung des Querträgers (18, 48, 58) nicht konstant ist und die Dicke zumindest des Stegs (26) entlang der Längserstreckung des Querträgers (18, 48, 58) nicht konstant ist, wobei der Querträger (18, 48, 58) durch ein spanloses Umformverfahren hergestellt ist, **dadurch gekennzeichnet, dass** die Flansche (22a-22f, 24a-24f) derart geformt sind, dass sie im mittleren Bereich der Längserstreckung des Querträgers (18, 48, 58) ein C-förmiges Profil aufweisen und an den jeweiligen Enden des Querträgers (18, 48, 58) ein U-förmiges Profil aufweisen.

10. Querträger (18, 48, 58) nach Anspruch 9,
wobei der Abstand der gegenüberliegend angeordneten Flansche (22a-22f, 24a-24f) in mindestens einem ersten Abschnitt (41) den Abstand in dem übrigen Teil des Querträgers (18, 48, 58) unterschreitet.

11. Querträger (18, 48, 58) nach Anspruch 10,
wobei der erste Flansch (22a-22f) eine entlang der Längserstreckung des Querträgers (18, 48, 58) durchgehend ebene Auflagefläche (28) aufweist und
wobei der zweite Flansch (24a-24f) entlang der Längserstreckung des Querträgers (18, 48, 58) unterschiedlich weit von dem ersten Flansch (22a-22f) beabstandet ist.

12. Querträger (18, 48, 58) nach einem der Ansprüche 9 bis 11,
wobei in zumindest einem Abschnitt (41, 50) des Querträgers (18, 48, 58) eine Einwölbung (32, 34, 56, 60) des zweiten Flansches (24a-24f) in Richtung des ersten Flansches (22a-22f) vorliegt.

13. Fahrzeug (66), aufweisend eine Fahrzeugstruktur (40) und mindestens einen Querträger (18, 48, 58) nach einem der Ansprüche 9 bis 12, der an der Fahrzeugstruktur (40) befestigt ist.

14. Fahrzeug (66) nach Anspruch 13, wobei das Fahrzeug (66) ein Flugzeug (66) ist.

15. Fahrzeug (66) nach Anspruch 14, wobei das Fahrzeug (66) einen Rumpf (68) mit einer Rumpfstruktur (40) als Fahrzeugstruktur (40) aufweist, wobei mehrere Querträger (18, 48, 58) quer zu einer Längsachse des Rumpfs (68) an der Rumpfstruktur (40) angeordnet sind.

## Claims

1. A method of manufacturing a crossbeam (18, 48, 58) for a vehicle, comprising the steps of:
- providing a workpiece (6) having different thicknesses and a pre-contour (10) from a metal sheet (4) of uniform thickness by flat roll forming to achieve different local thicknesses and cutting out the workpiece (6), and
- bending roll forming the workpiece (6) to form a crossbeam (18, 48, 58) having a cross-section (20a-20f) comprising at least two oppositely disposed flanges (22a-22f, 24a-24f) and a web (26) there between, wherein the spacing of the oppositely arranged flanges (22a-22f, 24a-24f) along a longitudinal extension of the crossbeam (18, 48, 58) is not constant and a thickness profile of at least the web (26) is determined by the step of planar roll forming, wherein the local thicknesses and the pre-contour are selected in such a manner that a geometric shape of the crossbeam (18, 48, 58) after the bending roll forming corresponds to a predetermined geometric shape with different thicknesses and heights of the web (26) and differently shaped regions of the flanges (22a-22f, 24a-24f) along the longitudinal extension of the crossbeam (18, 48, 58),
**characterised in that**
the flanges (22a-22f, 24a-24f) are shaped such that they have a C-shaped profile in the central region of the longitudinal extension of the crossbeam (18, 48, 58) and have a U-shaped profile at the respective ends of the crossbeam (18, 48, 58).

2. Method according to claim 1,
wherein the bending roll forming is performed in such a way that the spacing of the opposite flanges (22a-22f, 24a-24f) in at least a first portion (41) is less than the distance in the remaining part of the crossbeam (18, 48, 58).

3. Method according to claim 2,
wherein in the bending roll forming at least one first flange (22a-22f) and at least one second flange (24a-24f) are produced,
wherein the first flange (22a-22f) has a continuous planar bearing surface (28) along the longitudinal extent of the crossbeam (18, 48, 58), and
wherein the second flange (24a-24f) is spaced from the first flange (22a-22f) by different distances along the longitudinal extension of the crossbeam (18, 48, 58).

4. Method according to any one of the preceding claims,
wherein the preliminary contour (10) is selected such that in at least a portion of the crossbeam (18, 48, 58) there is a curvature (32, 34, 56, 60) of the second flange (24a-24f) in the direction of the first flange (22a-22f).

5. Method according to any one of the preceding claims,
wherein two first portions (41) are provided which are spaced apart from each other eccentrically on the crossbeam (18, 48, 58).

6. Method according to any one of the preceding claims,
wherein the planar roll forming is performed in such a manner that in a central region of the crossbeam (18, 48, 58) the thickness of the workpiece (6) is highest.

7. Method according to claim 2 or 5,
wherein the planar roll forming is performed such that the metal sheet thickness in the region of the first section (41) is less than in adjacent regions.

8. Method according to any one of the preceding claims,
wherein the planar roll forming is carried out in such a way that a transition region (16) is arranged between two regions (12, 14) of different sheet thickness, in which the thickness continuously decreases and which continuously adjoins the two adjacent regions (12, 14).

9. Crossbeam (18, 48, 58) for a vehicle, comprising at least two oppositely
flanges (22a-22f, 24a-24f) arranged opposite one another and a web (26) located there between, the spacing of the oppositely arranged flanges (22a-22f, 24a-24f) along the longitudinal extent of the crossbeam (18, 48, 58) not being constant and the thickness of at least the web (26) is not constant along the longitudinal extension of the crossbeam (18, 48, 58), wherein the crossbeam (18, 48, 58) is produced by a non-cutting forming process, **characterised in that**
the flanges (22a-22f, 24a-24f) are shaped in such a way that they have a C-shaped profile in the middle of the longitudinal extension of the crossbeam (18, 48, 58) and have a U-shaped profile at the respective ends of the crossbeam (18, 48, 58).

10. Crossbeam (18, 48, 58) according to claim 9,
wherein the spacing of the oppositely disposed flanges (22a-22f, 24a-24f) in at least a first portion (41) is less than the spacing in the remaining portion of the crossbeam (18, 48, 58).

11. Crossbeam (18, 48, 58) according to claim 10,
wherein the first flange (22a-22f) has a continuously planar bearing surface (28) along the longitudinal extent of the crossbeam (18, 48, 58), and
the second flange (24a-24f) being spaced apart from the first flange (22a-22f) by different distances along the longitudinal extent of the crossbeam (18, 48, 58).

12. Crossbeam (18, 48, 58) according to any one of claims 9 to 11,
wherein in at least one portion (41, 50) of the crossbeam (18, 48, 58) a curvature (32, 34, 56, 60) of the second flange (24a-24f) is present in the direction of the first flange (22a-22f).

13. A vehicle (66) comprising a vehicle structure (40) and at least one crossbeam (18, 48, 58) according to any one of claims 9 to 12, attached to the vehicle structure (40).

14. Vehicle (66) according to claim 13, wherein the vehicle (66) is an aircraft (66).

15. Vehicle (66) according to claim 14, wherein the vehicle (66) comprises a fuselage (68)
with a fuselage structure (40) as the vehicle structure (40), wherein a plurality of crossbeams (18, 48, 58) are arranged on the fuselage structure (40) transversely to a longitudinal axis of the fuselage (68).

## Revendications

1. Procédé de fabrication d'une traverse (18, 48, 58) pour un véhicule, comprenant les étapes suivantes :
- préparation d'une pièce à usiner (6) présentant différentes épaisseurs et un pré-contour (10) à partir d'une tôle (4) d'épaisseur uniforme par roulage plan pour obtenir différentes épaisseurs locales et découpage de la pièce à usiner (6), et
- le roulage par pliage de la pièce (6) pour former une traverse (18, 48, 58) avec une section transversale (20a-20f), qui comprend au moins deux brides (22a-22f, 24a-24f) disposées en face l'une de l'autre et une âme (26) située entre elles, la distance entre les brides (22a-22f, 24a-24f) disposées en face l'une de l'autre n'étant pas constante le long d'une extension longitudinale de la traverse (18, 48, 58) et une courbe d'épaisseur d'au moins l'âme (26) étant déterminée par l'étape de roulage plan, les épaisseurs locales et le pré-contour étant choisis de telle sorte qu'une forme géométrique de la traverse (18, 48, 58) après le roulage par pliage correspond à une forme géométrique prédéterminée avec des épaisseurs et des hauteurs différentes de l'âme (26) et des zones de forme différente des brides (22a-22f, 24a-24f) le long de l'extension longitudinale de la traverse (18, 48, 58),
**caractérisé en ce que**
les brides (22a-22f, 24a-24f) sont formées de telle sorte qu'elles présentent un profil en forme de C dans la partie centrale de l'extension longitudinale de la traverse (18, 48, 58) et un profil en forme de U aux extrémités respectives de la traverse (18, 48, 58).

2. procédé selon la revendication 1,
dans lequel le roulage par pliage est effectué de telle manière que la distance entre les brides (22a-22f, 24a-24f) dans au moins une première section (41) est inférieure à la distance dans la partie restante de la traverse (18, 48, 58).

3. Procédé selon la revendication 2,
dans lequel, par roulage avec pliage, au moins une première bride (22a-22f) et au moins une deuxième bride (24a-24f) est fabriquée,
la première bride (22a-22f) présentant une surface d'appui (28) plane continue le long de l'extension longitudinale de la traverse (18, 48, 58) et la deuxième bride (24a-24f) étant espacée de la première bride (22a-22f) à des distances différentes le long de l'extension longitudinale de la traverse (18, 48, 58).

4. Procédé selon l'une quelconque des revendications précédentes,
dans lequel le pré-contour (10) est choisi de manière à ce que, dans au moins une section du traverse (18, 48, 58), il existe un bombement (32, 34, 56, 60) de la deuxième bride (24a-24f) en direction de la première bride (22a-22f).

5. Procédé selon l'une quelconque des revendications précédentes,
dans lequel il est prévu deux premières sections (41) excentrées sur la traverse (18, 48, 58) et espacées l'une de l'autre.

6. Procédé selon l'une quelconque des revendications précédentes,
dans lequel le roulage plan est effectué de manière à ce que, dans une zone centrale de la traverse (18, 48, 58), l'épaisseur de la pièce (6) est la plus élevée.

7. Procédé selon la revendication 2 ou 5,
dans lequel le roulage plan est réalisé de manière à ce que l'épaisseur de la tôle soit plus faible dans la zone de la première section (41) que dans les zones adjacentes.

8. Procédé selon l'une quelconque des revendications précédentes,
le roulage plan étant réalisé de telle sorte qu'entre deux zones (12, 14) d'épaisseur de tôle différente est disposée une zone de transition (16) dans laquelle l'épaisseur diminue de manière continue et qui se raccorde de manière continue aux deux zones voisines (12, 14).

9. Traverse (18, 48, 58) pour un véhicule, comprenant au moins deux brides (18, 48, 58)
disposées l'une par rapport à l'autre et une âme (26) située entre elles, la distance entre les brides (22a-22f, 24a-24f) disposées en face l'une de l'autre le long de l'extension longitudinale de la traverse (18, 48, 58) n'est pas constante et l'épaisseur d'au moins l'âme (26) n'est pas constante le long de l'extension longitudinale de la traverse (18, 48, 58), la traverse (18, 48, 58) étant fabriquée par un procédé de formage sans enlèvement de copeaux, **caractérisé en ce que**
les brides (22a-22f, 24a-24f) sont formées de telle sorte qu'elles se trouvent dans la partie centrale de la poutre présentent un profil en forme de C dans la zone d'extension longitudinale de la traverse (18, 48, 58) et un profil en forme de U aux extrémités respectives de la traverse (18, 48, 58).

10. Traverse (18, 48, 58) selon la revendication 9,
dans laquelle la distance entre les brides (22a-22f, 24a-24f) disposées en vis-à-vis dans au moins une première section (41) est inférieure à la distance dans le reste de la traverse (18, 48, 58).

11. Traverse (18, 48, 58) selon la revendication 10,
la première bride (22a-22f) présentant une surface d'appui (28) plane continue le long de l'extension longitudinale de la traverse (18, 48, 58) et la deuxième bride (24a-24f) étant espacée de la première bride (22a-22f) à des distances différentes le long de l'extension longitudinale de la traverse (18, 48, 58).

12. Traverse (18, 48, 58) selon l'une quelconque des revendications 9 à 11,
dans lequel, dans au moins une section (41, 50) de la traverse (18, 48, 58), un bombement (32, 34, 56, 60) de la deuxième bride (24a-24f) en direction de la première bride (24a-24f) est présente.

13. Véhicule (66) comprenant une structure de véhicule (40) et au moins une traverse (18, 48, 58) selon l'une quelconque des revendications 9 à 12, fixée à la structure (40) du véhicule.

14. Véhicule (66) selon la revendication 13, dans lequel le véhicule (66) est un aéronef (66).

15. Véhicule (66) selon la revendication 14, dans lequel le véhicule (66) comprend un fuselage (68) avec une structure de fuselage (40) comme structure de véhicule (40), dans lequel une pluralité de traverses (18, 48, 58) sont disposées sur la structure de fuselage (40) transversalement à un axe longitudinal du fuselage (68).
